(19) **Europäisches Patentamt**
**European Patent Office**
**Office européen des brevets**

(11) **EP 4 228 906 B1**

(12) **EUROPEAN PATENT SPECIFICATION**

(45) Date of publication and mention
of the grant of the patent:
**21.01.2026 Bulletin 2026/04**

(21) Application number: **21881289.9**

(22) Date of filing: **09.09.2021**

(51) International Patent Classification (IPC):
**B60C 7/14** *(2006.01)*   **B60C 7/22** *(2006.01)*
**B60C 9/20** *(2006.01)*   **B29D 30/02** *(2006.01)*
**B60C 9/00** *(2006.01)*

(52) Cooperative Patent Classification (CPC):
**B60C 7/146; B29D 30/02; B60C 7/143; B60C 7/22;**
B60C 9/0007; B60C 2009/0078

(86) International application number:
**PCT/US2021/071398**

(87) International publication number:
**WO 2022/082135 (21.04.2022 Gazette 2022/16)**

(54) **NON-PNEUMATIC TIRE HAVING REINFORCED SUPPORT STRUCTURE AND METHOD OF MAKING SAME**

LUFTLOSER REIFEN MIT VERSTÄRKTER STÜTZSTRUKTUR UND
HERSTELLUNGSVERFAHREN DAFÜR

PNEU NON PNEUMATIQUE PRÉSENTANT UNE STRUCTURE DE SUPPORT RENFORCÉE ET
PROCÉDÉ DE FABRICATION ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2020 US 202063090859 P**

(43) Date of publication of application:
**23.08.2023 Bulletin 2023/34**

(73) Proprietor: **Bridgestone Americas Tire
Operations, LLC
Nashville, TN 37201 (US)**

(72) Inventors:
• **TUPTA, Andrew R.
Massillon, Ohio 44646 (US)**
• **RIMAI, Benjamin E.
Copley, Ohio 44321 (US)**
• **BURTON, Christopher W.
Stow, Ohio 44224 (US)**

(74) Representative: **Marks & Clerk LLP
15 Fetter Lane
London EC4A 1BW (GB)**

(56) References cited:
EP-A2- 1 097 824          WO-A1-2020/021006
KR-A- 20130 056 788       US-A- 5 109 661
US-A- 5 843 583           US-A1- 2006 124 219
US-A1- 2010 132 858       US-A1- 2012 234 444
US-A1- 2017 008 342       US-A1- 2018 361 793
US-B1- 6 253 536

• ANONNMOUS: "Standard Test Methods for Steel
Tire Cords", NORME ASTM D2969-04, 1 June
2014 (2014-06-01), XP055808003, Retrieved from
the Internet <URL:https://www.astm.org/
d2969-04.html> [retrieved on 20210527]
• ISO: "Non-parallel steel wire and cords for tyre
reinforcement", ISO 17832:2009, 1 July 2009
(2009-07-01), XP055709392, Retrieved from the
Internet <URL:https://www.iso.org/standard/
38499.html> [retrieved on 20200629]
• PLC NOKIAN TYRES: "REINFORCING
MATERIALS IN RUBBER PRODUCTS",
AROVERKET.COM/, 1 March 2015 (2015-03-01),
XP055808009, Retrieved from the Internet
<URL:https://laroverket.com/wp-content/
uploads/2015/03/reinforcing_materials.pdf>
[retrieved on 20210527]

Processed by Luminess, 75001 PARIS (FR)

**Description**

**FIELD OF INVENTION**

The present invention relates to a non-pneumatic tire having support structure containing a reinforcement layer and a method of making the same.

**BACKGROUND**

Various tire constructions have been developed which enable a tire to run in an uninflated or underinflated condition. Non-pneumatic tires do not require inflation, while "run flat tires" may continue to operate after receiving a puncture and a complete or partial loss of pressurized air, for extended periods of time and at relatively high speeds. Non-pneumatic tires may include a plurality of spokes, a webbing, or other support structure that connects an inner ring to an outer ring.

US2010132858A1 discloses a non-pneumatic tire which can improve a riding quality, a noise performance and the like while improving a durability, and can further sufficiently suppress a buckling of a ground portion between spokes, because a circumferential fluctuation of a tire rigidity is hard to be generated due to a positional relationship between a spoke position and a center position of the ground surface, and a strain can be dispersed into each of portions of a support structure body. In a non-pneumatic tire comprising a support structure body supporting a load from a vehicle, the support structure body includes an inner annular portion, an intermediate annular portion concentrically provided in an outer side of the inner annular portion, an outer annular portion concentrically provided in an outer side of the intermediate annular portion, a plurality of inner coupling portions coupling the inner annular portion and the intermediate annular portion, and a plurality of outer coupling portions coupling the outer annular portion and the intermediate annular portion, and the number of the outer coupling portions is larger than the number of the inner coupling portions.

US2017008342A1 discloses a non-pneumatic tire that may include an inner circumferential barrier configured to be associated with a hub, and an outer circumferential barrier. The tire may also include a plurality of spokes extending between the inner and outer circumferential barriers, and a shear band radially exterior relative to the outer circumferential barrier. The shear band may include an internal tension band associated with the outer circumferential barrier including at least one circumferentially extending reinforcement cord. The shear band may also include an external compression band including at least one circumferentially extending reinforcement cord. The shear band may further include at least one shear module extending between the internal tension band and the external compression band. The shear module may include at least one shear module including a first reinforcement element, a second reinforcement element, and a separator between the first reinforcement element and the second reinforcement element.

**SUMMARY OF THE INVENTION**

In one embodiment, a non-pneumatic tire according to claim 5 and a method of making the non-pneumatic tire according to claim 1 is provided.

**BRIEF DESCRIPTION OF DRAWINGS**

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale, and the proportion of certain elements may be exaggerated for the purpose of illustration.

Figure 1 is a front view of one embodiment of a non-pneumatic tire;
Figure 2 is an enlarged partial front view of the non-pneumatic tire of **Figure 1;**
Figure 3 is a schematic drawing illustrating a partial front view of a non-pneumatic tire during its construction;
Figure 4 is a front view of an alternative embodiment of a non-pneumatic tire;
Figure 5 is a perspective view of another alternative embodiment of a non-pneumatic tire;
Figure 6 illustrates a close-up front view of the non-pneumatic tire of **Figure 5;**
Figure 7a is a partial front view of a Right Lang Lay cord construction;
Figure 7b is a partial front view of a Left Lang Lay cord construction; and
Figure 8 is a cross-sectional view of one embodiment of a cord construction.

**DETAILED DESCRIPTION**

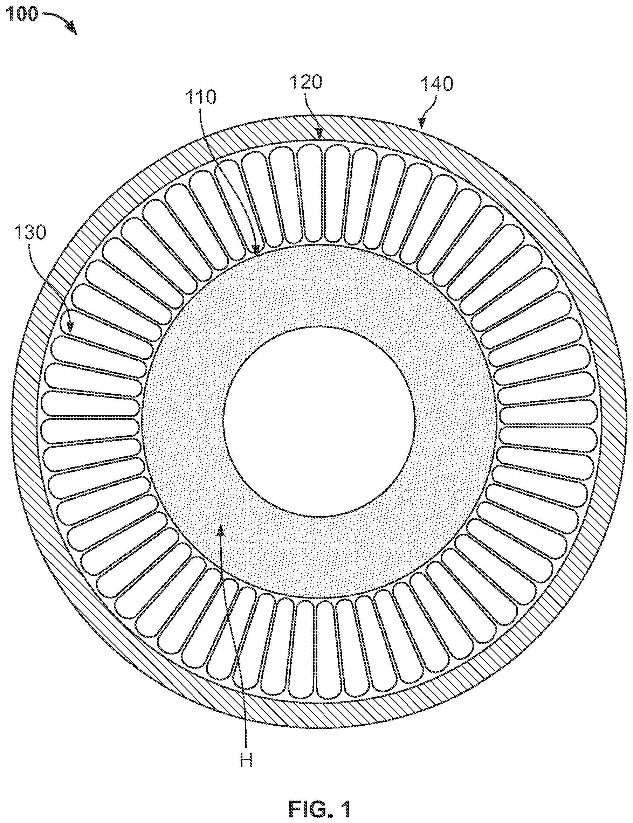

**Figure 1** is a front view of one embodiment of a non-pneumatic tire 100. The non- pneumatic tire 100 includes an inner ring 110 having a first diameter, and an outer ring **120** having a second diameter greater than the first diameter. The outer ring **120** is substantially coaxial with the inner ring **110**. In the illustrated embodiment, the inner ring **110** is shown as being attached to a hub **H.** A plurality of spokes **130** extend between the inner ring **110** and the outer ring **120**. In an alternative embodiment, a webbing or other support structure may be employed instead of spokes. It should be understood that the term "support structure" may refer to either webbing or spokes.

A circumferential tread **140** is disposed about the outer ring **120** in the illustrated embodiment. The tread **140** may include tread elements such as grooves, ribs, blocks, lugs, sipes, studs, and other elements. A shear band or other shear element or reinforcement structure (not shown) may be disposed between the outer ring **120** and the tread **140**. In an alternative embodiment (not shown), the separate tread may be omitted and instead tread elements may be formed directly on the outer ring.

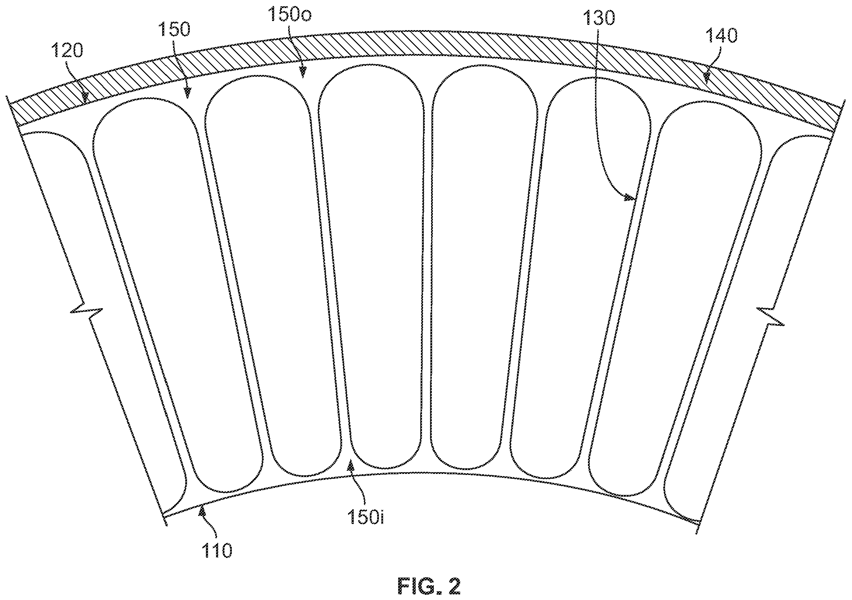

**Figure 2** is an enlarged partial front view of the non-pneumatic tire of **Figure 1**. As can be seen in this view, the spokes **130** are formed by a plurality of loops disposed in a series circumferentially about the tire. Each of the individual loops extends laterally from a first side of the non-pneumatic tire **100** to second side of the non-pneumatic tire **100**. Each of the plurality of loops defines an opening that is visible from the first side of the tire.

In the illustrated embodiment, each of the plurality of loops is in direct contact with both the inner ring **110** and the outer ring **120**. A plurality of fillets **150** are also disposed between the inner ring **110** and the outer ring **120**. The plurality of fillets **150** includes inner fillets **150i** and outer fillets **150o**. The inner fillets **150i** are in direct contact with the inner ring **110,** and both a first loop and a second loop in each adjacent pair of loops. The outer fillets **150o** are in direct contact with the outer ring **120,** and both the first loop and second loop in each adjacent pair of loops.

The inner and outer rings **110, 120** may be constructed of a polymeric material, such as natural or synthetic rubber, or other elastomeric material. Alternatively, the inner and outer rings **110, 120** may be constructed of a harder polymeric material such as polyurethane, polyester, nylon, or polyvinyl chloride (PVC). The spokes 130 are formed of loops that may be constructed of elastomeric material having a single layer of reinforcement disposed therein. The loops may be constructed from a sheet of elastomeric material, or from a spiraled ribbon of elastomeric material having a single layer of reinforcement disposed therein. Where the loop is formed by a sheet, the ends of the sheet may be butt spliced together. The splice may be located at the inner ring or outer ring of the non-pneumatic tire. Where the loop is formed by a spiraled ribbon, the butt splice may be omitted.

In both instances, the reinforcement may be steel cords. In an alternative embodiment, the loops may be constructed of elastomeric material having two or more layers of reinforcements.

In one embodiment, the layer of reinforcement includes one or more steel cords containing multiple filaments or strands of filaments, and the cord satisfies the following relationship:

$$x*y < 18,000 \qquad \text{MPa mm,}$$

where x is the stiffness of cord measured in Megapascals, and
y is the diameter of the largest filament in the steel cord measured in mm.

To determine the stiffness of the cord discussed in this disclosure and any embodiment herein, the cord is subjected to tensile strength testing according to ASTM D-2969 using a gauge length of 660 mm. The stress is calculated by dividing the load on the cord (N) by the cross-sectional area of the cord (mm²). The cross-sectional area of the cord is the sum of the real cross-sectional area of the individual filaments in the cord, not the area obtained by circumscribing a circle around the entire cord. The stress value (MPa) for a given strain (mm/mm) is plotted up to the point of cord breakage and the whole curve is fitted with a linear trend line. The slope of the trend line represents the stiffness of the cord.

It has been found that to improve fatigue performance of the reinforcement layer; it is desirable to use a steel cord having relatively low stiffness in combination with a steel cord having a relatively small diameter. In one embodiment, the steel cord may have a stiffness of less than 90,000 MPa. In another embodiment, the steel cord may have a stiffness of less than 70,000 MPa, and in yet another embodiment the stiffness may be less than 50,000 MPa. In one embodiment, the diameter of the largest filament in the steel cord may be 0.2 mm or less. In another embodiment, the diameter of the largest filament in the steel cord may have a diameter of less than 0.19 mm, and in yet another embodiment a diameter of less than 0.18 mm.

In one embodiment, the steel cords have a Lang Lay construction. A Lang Lay construction is one in which the filaments that make up the strands are laid in a helical pattern and twisted in the same direction that the strands are laid and twisted to make up the cord. The Lang Lay construction provides improved fatigue resistance, which is beneficial for the support structure of the non-pneumatic tire.

If the loops have more than one layer of reinforcement, at least one layer has steel cords satisfying the following relationship:

$$x*y < 18,000 \qquad \text{MPa *mm,}$$

where x is the stiffness of cord measured in Megapascals, and
y is the diameter of the largest filament in the cord measured in mm.

In other embodiments that have multiple layers of reinforcement, more than one layer, or alternatively all layers, may have steel cords that satisfy the following relationship:

$$x*y < 18,000 \quad \text{MPa} * \text{mm},$$

where x is the stiffness of cord measured in Megapascals, and
y is the diameter of the largest filament in the cord measured in mm.

Likewise, if the loops have more than one layer of reinforcement, in one embodiment, one layer may have steel cords having a Lang Lay construction. In alternative embodiments, more than one layer may have steel cords having a Lang Lay construction. In other alternative embodiments, all layers of reinforcement may have steel cords having a Lang Lay construction.

The tread **140** and the fillets **150** may both be constructed of an elastomeric material, such as natural or synthetic rubber, other elastomeric material.

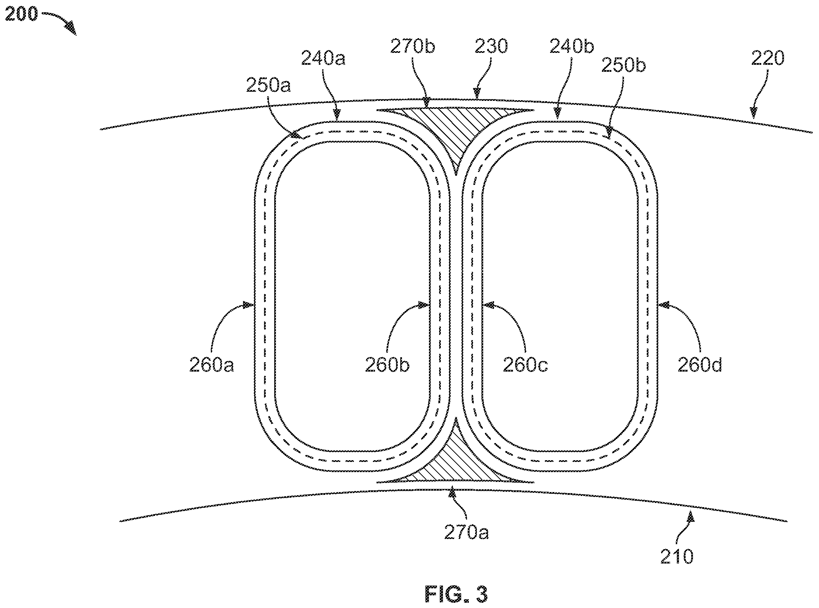

Additional details of the loops of the non-pneumatic tire shown in **Figure 1** and **Figure 2** may be seen in **Figure 3,** which is a schematic drawing illustrating a partial front view of a non-pneumatic tire **200** during its construction. The non- pneumatic tire **200** includes an inner ring **210** having a first diameter, and an outer ring **220** having a second diameter greater than the first diameter. The outer ring **220** is substantially coaxial with the inner ring **210.** As shown in this figure, a spoke **230** is being formed by a first loop **240a** and a second loop **240b.** The first loop includes a first layer of reinforcement cords **250a,** and the first loop forms a first substantially radial extent **260a** and a second substantially radial extent **260b.** The second loop includes a second layer of reinforcement cords **250b,** and the second loop forms a third substantially radial extent **260c** and a fourth substantially radial extent **260d.**

Additionally, a first fillet **270a** is disposed between the first loop **240a,** the second loop **240b,** and the inner ring **210.** A second fillet **270b** is likewise disposed between the first loop **240a,** the second loop **240b,** and the outer ring **220.**

At the stage shown in Figure 3, the first loop 240a is spaced from the second loop 240b. This spacing may be exaggerated for illustrative purposes. During the process of forming the non-pneumatic tire, heat and pressure are applied during a curing process. Specifically, pressure is applied to the second extent **260b** of the first loop **240a** and to the third extent **260c** of the second loop **240b,** which causes the second extent **260b** to contact the third extent **260c.** As heat and pressure are applied, the second extent **260b** bonds with the third extent **260c,** such that the first loop **240a** and the second loop **240b** form a single spoke **230** having two layers of reinforcement cords formed by the first and second layer of reinforcement cords **250a,b.** The resulting spoke **230** extends in a substantially radial direction, in the same manner as the spokes **130** of **Figures 1** and **2.**

In one embodiment, at least half of the second extent **260b** is in contact with at least half of the third extent **260c.** In an alternative embodiment, at least two-thirds of the second extent **260b** is in contact with at least two-thirds of the third extent **260c.**

In the illustrated embodiment, each of the first and second layers of reinforcement cords **250a,b** extends in a substantially radial direction in the resulting spoke **130.** In an alternative embodiment, one or both of the layers of reinforcement cords is biased with respect to the radial direction. In one such embodiment, one or both of the layers of reinforcement cords is biased at an angle between 50° and 90°. In such an embodiment, a butt splice may also be angled.

In an alternative embodiment, the extents between the inner and outer ring are curved rather than linear. Curved extents may be used to control the direction and the magnitude of spoke buckling as the tire rotates. Such curved extents may still be considered substantially radial. In one such embodiment, the reinforcement cords may have the same curve as the extents. In an alternative embodiment, the reinforcement cords may have different curves from the extents. In another alternative embodiment, the reinforcement cords may extend linearly while the extents are curved.

In other alternative embodiments, the extents are substantially linear while one or more of the layers of reinforcement cords are curved with respect to radial direction. Curved layers of reinforcement cords may be used to control the direction and the magnitude of spoke buckling as the tire rotates. In such embodiments, the resulting spoke may still extend linearly when in an uncompressed state, even though one or more of the layers of reinforcement cords are curved. In such an arrangement, the spokes may be described as having a reinforcement pre-curvature.

To build a non-pneumatic tire, such as the non-pneumatic tire **100** or **200,** an operator may perform the steps of providing an inner ring of elastomeric material, providing an outer ring of elastomeric material, and arranging the inner ring and the outer ring such that the inner ring is substantially coaxial with the outer ring. In one embodiment, the operator provides sheets of reinforced elastomeric material, and forms a plurality of loops with the sheets of reinforced elastomeric material. The elastomeric material is reinforced with steel cords that satisfy the following relationship:

$$x*y < 18,000 \quad \text{MPa} * \text{mm},$$

where x is the stiffness of cord measured in Megapascals, and
y is the diameter of the largest filament in the cord measured in mm.

The steel cords may have a Lang Lay construction. Each loop may be formed by butt splicing the ends of the sheet together. The operator then places the loops of reinforced elastomeric material between the inner ring and the outer ring. The loops may be arranged such that the butt splice is tangential to either the inner ring of the outer ring.

In another embodiment, the operator provides a ribbon of reinforced elastomeric material. In one particular embodiment, the operator forms a ribbon by extruding a ribbon of green rubber with exactly two steel cords, thus forming a green rubber ribbon with two steel cords embedded therein.

In yet another embodiment, the operator forms a ribbon by extruding a ribbon of green rubber with one steel cord. In still another embodiment, the operator forms a ribbon by extruding a ribbon of green rubber with three or more steel cords.

In an alternative embodiment, the ribbons may be made by a calendering operation rather than an extruding operation. For example, in one embodiment, the ribbons are made by calendering rubber over cords and the slitting the calendered sheet into thin ribbons containing one, two, or more cords.

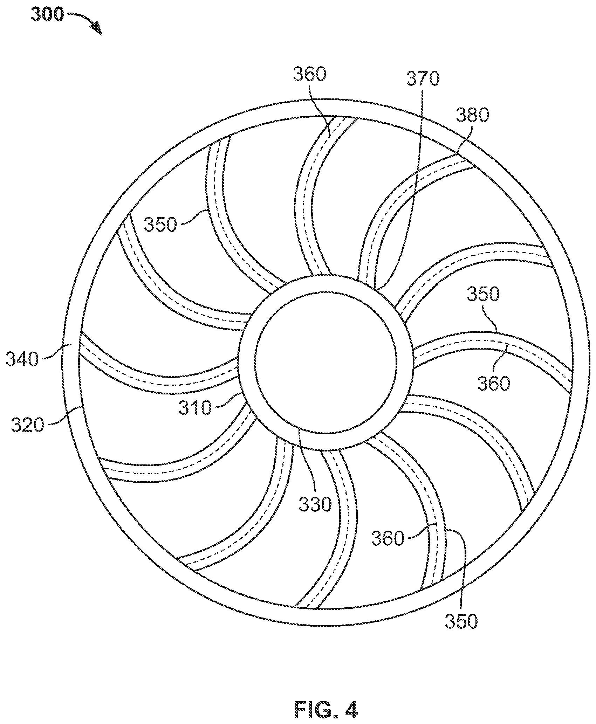

**Figure 4** shows an alternative embodiment of a non-pneumatic tire **300**. The non-pneumatic tire **300** includes an inner ring **310** having a first diameter, and an outer ring **320** having a second diameter greater than the first diameter. The outer ring **320** is substantially coaxial with the inner ring **310**. In the illustrated embodiment, the inner ring **310** is shown as being attached to a hub **330**.

A circumferential tread **340** is disposed about the outer ring **320**. The tread **340** may include tread elements such as grooves, ribs, blocks, lugs, sipes, studs, and other elements. A shear band or other shear element or reinforcement structure (not shown) may be disposed between the outer ring **320** and the tread **340**. In an alternative embodiment, the separate tread may be omitted and instead tread elements may be formed directly on the upper ring.

In the illustrated embodiment, a plurality of individual spokes **350** extend between the inner ring **310** and the outer ring **320**. In this embodiment, the design of each one of the plurality of spokes **350** is substantially identical. However, in an alternative embodiment, the plurality of spokes may include spokes having different designs.

The spokes **350** each have a first spoke end **370** and a second spoke end 380, and follow a path that is offset from being perfectly straight between the first spoke end 370 and a second spoke end 380.

The inner and outer rings 310, 320 may be constructed of a polymeric material, such as natural or synthetic rubber, or other elastomeric material. Alternatively, the inner and outer rings 310, 320 may be constructed of a harder polymeric material such as polyurethane, polyester, nylon, or polyvinyl chloride (PVC). The spokes 350 may be constructed of elastomeric material having a single layer of reinforcement 360 disposed therein. More specifically, the spokes 350 may be constructed from a sheet of elastomeric material having a single layer of reinforcement 360 disposed therein.

The reinforcement layer comprises steel cords. In an alternative embodiment (not shown), the spokes may be constructed of elastomeric material having two or more layers of reinforcements.

The layer of reinforcement contains steel cords that satisfy the following relationship:

$$x*y < 18,000 \qquad MPa * mm,$$

where x is the stiffness of cord measured in Megapascals, and
y is the diameter of the largest filament in the cord measured in mm.

In one embodiment, the steel cord may have a stiffness of less than 90,000 MPa. In another embodiment, the cord may have a stiffness of less than 70,000 MPa, and in yet another embodiment the stiffness may be less than 50,000 MPa. In one embodiment, the diameter of the largest filament in the cord may be 0.2 mm or less. In another embodiment, the diameter of the largest filament in the cord may have a diameter of less than 0.19 mm, and in yet another embodiment a diameter of less than 0.18 mm. In one embodiment, the cords have a Lang Lay construction.

If the spokes have more than one layer of reinforcement, at least one layer has cords that satisfy the following relationship:

$$x*y < 18,000 \qquad MPa * mm,$$

where x is the stiffness of cord measured in Megapascals, and
y is the diameter of the largest filament in the cord measured in mm.

In other embodiments that have multiple layers of reinforcement, more than one layer, or alternatively all layers, may have cords that satisfy the following relationship:

$$x*y < 18,000 \qquad MPa * mm,$$

where x is the stiffness of cord measured in Megapascals, and
y is the diameter of the largest filament in the cord measured in mm.

Likewise, if the spokes have more than one layer of reinforcement, in one embodiment, one layer may have steel cords having a Lang Lay construction. In alternative embodiments, more than one layer may have steel cords having a Lang Lay construction. In other alternative embodiments, all layers of reinforcement may have steel cords having a Lang Lay construction.

The tread **340** may be constructed of an elastomeric material, such as natural or synthetic rubber, other elastomeric material.

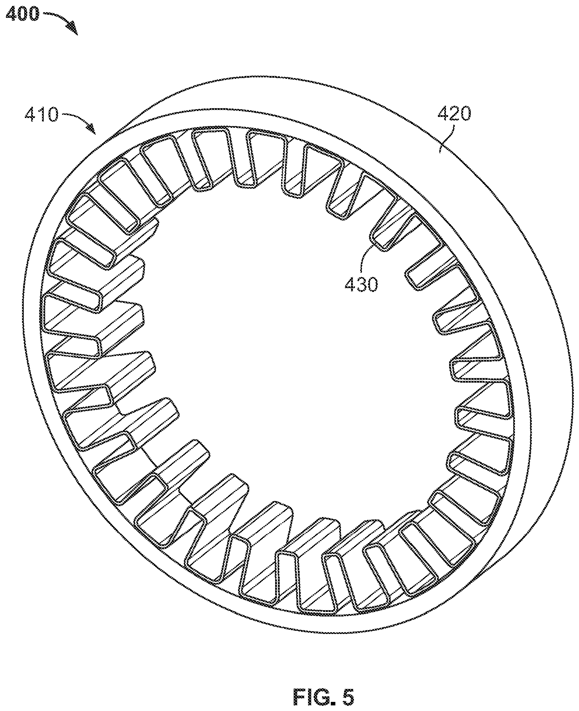

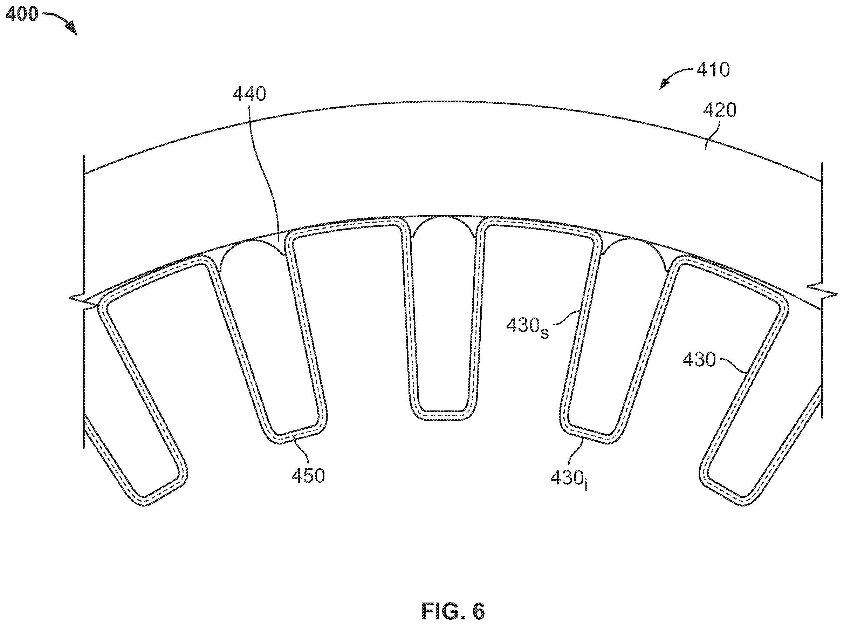

**Figure 5** shows another alternative embodiment of a non-pneumatic tire **400,** while **Figure 6** shows a close-up front view of the non-pneumatic tire **400** shown in **Figure 5.** The alternative tire shown in Figures 5 and 6 does not fall within the literal scope of the claims. The non-pneumatic tire **400** includes an outer ring **410.** The outer ring **410** may be constructed of a rubber ply **420.** Alternatively, the outer ring **410** may be constructed of a material other than rubber. In alternative embodiments, the outer ring is formed by a ply constructed of a foamed polymer, polyurethane, thermoplastics, resins, or other elastomeric or polymeric material. In another alternative embodiment, the ply is constructed of metal instead of a polymeric material. In another alternative embodiment, the outer ring 410 is a solid hoop.

The tire 400 further includes a plurality of loops 430 extending inward from the outer hoop 410. In the illustrated embodiment, the loops 430 are formed by a serpentine spoke ply disposed continuously about the central axis of the tire 400 such that a longitudinal axis of the serpentine spoke ply is substantially parallel to the equatorial plane of the tire 400. The serpentine spoke ply follows a winding path between an inner diameter and an outer diameter, such that the serpentine spoke path has a plurality of inner portions $430_i$ that extend in a substantially circumferential direction about the inner diameter. The serpentine spoke path further has a plurality of outer portions $430_o$ that extend in a substantially circumferential direction about the outer diameter. A plurality of spoke portions $430_s$ extend in a substantially radial direction between the inner diameter and the outer diameter.

In the illustrated embodiment, all of the inner portions $430_i$ have substantially the same arc length. Likewise, each outer portion $430_o$ also has substantially the same arc length, with the arc length of the outer portions $430_o$ being greater than the arc length of the inner portions $430_i$. In one embodiment, a total arc length of the inner portions $430_i$ is between 120 degrees and 240 degrees. A total arc length of the outer portions $430_o$ is also between 120 degrees and 240 degrees. In one embodiment, a sum of the total arc length of the inner portions $430_i$ and the total arc length of the outer portions $430_o$ is 360 degrees. In an alternative embodiment, a sum of the total arc length of the inner portions and the total arc length of the outer portions is less than 360 degrees. In another alternative embodiment, a sum of the total arc length of the inner portions and the total arc length of the outer portions is greater than 360 degrees.

In an alternative embodiment, different inner portions may have different arc lengths. Likewise, different outer portions may also have different arc lengths.

In the illustrated embodiment, the loops **430** are constructed of a ply having a width equal to a width of the tire **400.** In an alternative embodiment, the loops are constructed of a ply that is narrower than the tire. In such an embodiment, the ply may be biased with respect to the equatorial plane of the tire. In one such embodiment, each of the spoke portions of the serpentine spoke ply extends at an angle of less than 45 degrees with respect to the radial direction. Likewise, each of the inner portions of the serpentine spoke ply extends at an angle of less than 45 degrees with respect to the equatorial plane and each of the outer portions of the serpentine spoke ply extend at an angle of less than 45 degrees with respect to the equatorial plane.

The loops **430** may be constructed of elastomeric material having a single layer of reinforcement **450** disposed therein. The reinforcement may be steel cords. In other embodiments, the reinforcement may be formed by cords constructed of nylon, polyester, fiber glass, carbon fiber, aramid, glass, polyethylene (polyethylene terephthalate), or other reinforcement materials. In an alternative embodiment, the loops may be constructed of elastomeric material having two or more layers of reinforcements.

The layer of reinforcement **450** contains steel cords that satisfy the following relationship:

$$x * y < 18,000 \quad MPa * mm,$$

where x is the stiffness of cord measured in Megapascals, and

y is the diameter of the largest filament in the cord measured in mm.

In one embodiment, the steel cord may have a stiffness of less than 90,000 MPa. In another embodiment, the steel cord may have a stiffness of less than 70,000 MPa, and in yet another embodiment the stiffness may be less than 50,000 MPa. In one embodiment, the diameter of the largest filament in the steel cord may be 0.2 mm or less. In another embodiment, the diameter of the largest filament in the steel cord may have a diameter of less than 0.19 mm, and in yet another embodiment a diameter of less than 0.18 mm. In one embodiment, the steel cords have a Lang Lay construction.

If the loops have more than one layer of reinforcement, at least one layer has steel cords that satisfy the following relationship:

$$x * y < 18,000 \quad MPa * mm,$$

where x is the stiffness of the steel measured in Megapascals, and

y is the diameter of the largest filament in the steel cord measured in mm.

In other embodiments that have multiple layers of reinforcement, more than one layer, or alternatively all layers, may have steel cords that satisfy the following relationship:

$$x*y < 18,000 \quad \text{MPa} * \text{mm},$$

where x is the stiffness of cord measured in Megapascals, and
y is the diameter of the largest filament in the cord measured in mm.

Likewise, if the loops have more than one layer of reinforcement, in one embodiment, one layer may have steel cords having a Lang Lay construction. In alternative embodiments, more than one layer may have steel cords having a Lang Lay construction. In other alternative embodiments, all layers of reinforcement may have steel cords having a Lang Lay construction.

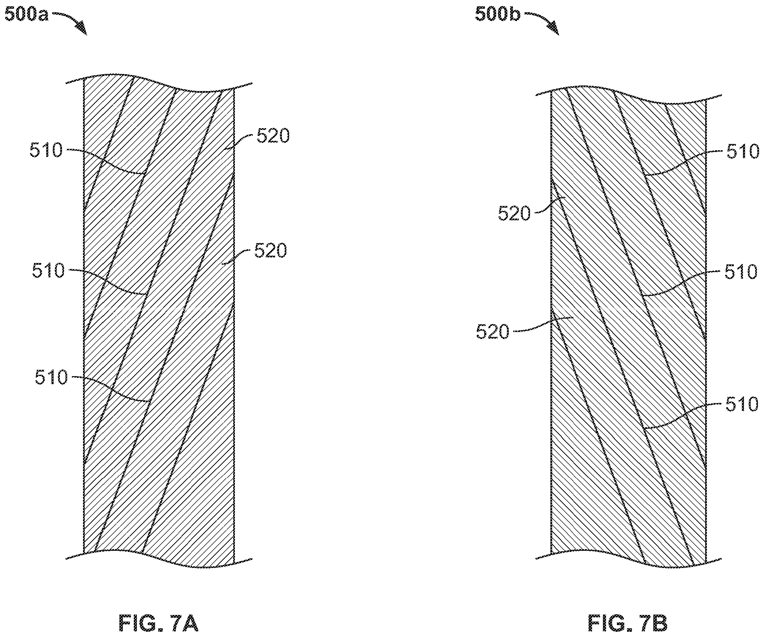

**Figure 7a** is a partial front view of a cord having a Right Lang Lay construction, and **Figure 7b** is a partial view of a cord having a Left Lang Lay construction. It can be seen that the lay of strands **510** is in the same direction as the lay of filaments **520.**

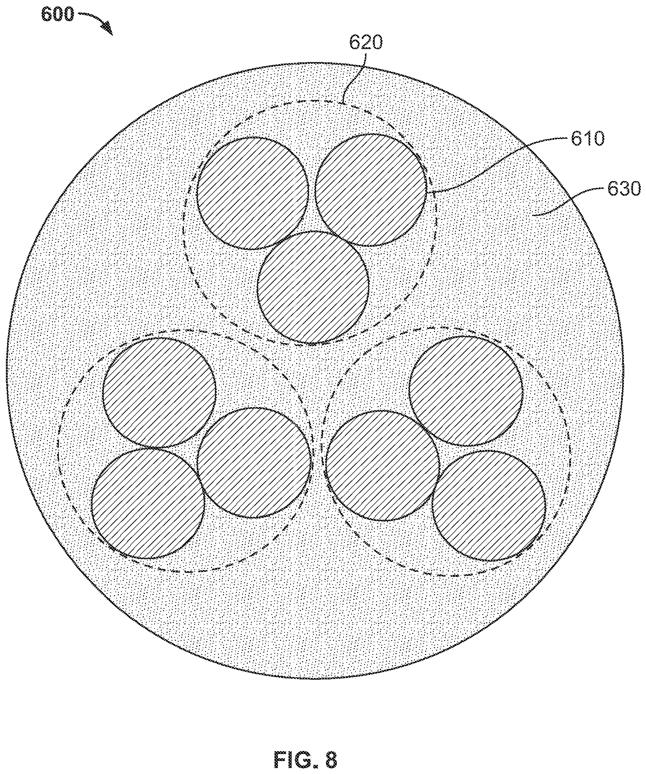

**Figure 8** is sectional view of an exemplary cord construction that can be used in the reinforcement layer of any of the embodiments discussed herein. In the example shown, cord **600** is 3x3 cord, meaning three filaments **610** are wound to make a strand **620,** and three strands **620** are wound to make the cord **600.** The cord **600** is coated with an elastomeric material **630.** In one particular embodiment, the cord is a steel cord having a 3x3x0.17 Lang Lay construction, meaning three filaments are wound to make a strand, three strands are wound to make a cord, and each of the filaments have a diameter of 0.17 mm.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art.

**Claims**

1. A method of making a non-pneumatic tire (100; 200; 300; 400), the method comprising:

   providing an inner ring (110; 210; 310) having a first diameter;
   providing an outer ring (120; 220; 320) having a second diameter greater than the first diameter, the outer ring (120; 220; 320) being substantially coaxial with the inner ring (110; 210; 310);
   extending a support structure (130; 230; 350) between the inner ring (110; 210; 310) and the outer ring (120; 220; 320),

   wherein the support structure (130; 230; 350) includes a layer of reinforcement (250a, 250b; 360) disposed therein, and said layer of reinforcement (250a, 250b; 360) comprises one or more steel cords (250a, 250b; 500a, 500b; 600) containing multiple filaments (520; 610) or strands (510; 620) of filaments, said steel cord (250a, 250b; 500a, 500b; 600) satisfying the following relationship:

   $$x*y < 18,000 \text{ MPa*mm},$$

   where x is the stiffness of the steel cord (250a, 250b; 500a, 500b; 600) measured in MPa,
   wherein stiffness of the steel cord (250a, 250b; 500a, 500b; 600) is determined by:

   subjecting the steel cord (250a, 250b; 500a, 500b; 600) to tensile strength testing according to ASTM D-2969 using a gauge length of 660 mm,
   calculating stress by dividing a load on the steel cord (250a, 250b; 500a, 500b; 600) by a cross-sectional area of the steel cord (250a, 250b; 500a, 500b; 600), wherein the cross-sectional area of the steel cord (250a, 250b; 500a, 500b; 600) is the sum of real cross-sectional area of individual filaments in the steel cord (250a, 250b; 500a, 500b; 600),
   plotting stress value for a given strain up to a point of breakage, and fitting a whole curve defined by the plotted points with a linear trend line, wherein a slope of the linear trend line represents the stiffness of the steel cord (250a, 250b; 500a, 500b; 600), and

y is the diameter of the largest filament (520; 610) in the steel cord (250a, 250b; 500a, 500b; 600) measured in mm.

2. The method of claim 1, further comprising twisting the steel cords (250a, 250b; 500a, 500b; 600) in a Lang Lay construction.

3. The method of claim 2, further comprising twisting the steel cords (250a, 250b; 500a, 500b; 600) comprise in a 3x3x0.17 mm construction.

4. The method of claim 1, further comprising forming the support structure (130; 230; 350) of elastomeric material.

5. A non-pneumatic tire (100; 200; 300) comprising:

an inner ring (110; 210; 310) having a first diameter;
an outer ring (120; 220; 320) having a second diameter greater than the first diameter, the outer ring (120; 220; 320) being substantially coaxial with the inner ring (110; 210; 310);
a support structure (130; 230; 350) extending between the inner ring (110; 210; 310) and the outer ring (120; 220; 320), wherein the support structure (130; 230; 350) includes a layer of reinforcement (250a, 250b; 360) disposed therein, and said layer of reinforcement (250a, 250b; 360) comprises one or more steel cords (250a, 250b; 500a, 500b; 600) containing multiple filaments (520; 610) or strands (510; 620) of filaments,
**characterised in that**
said steel cord (250a, 250b; 500a, 500b; 600) satisfies the following relationship:

$$x*y < 18{,}000 \text{ MPa*mm,}$$

where x is the stiffness of the steel cord (250a, 250b; 500a, 500b; 600) measured in MPa,
wherein the stiffness of the steel cord (250a, 250b; 500a, 500b; 600) is determined by:

subjecting the steel cord (250a, 250b; 500a, 500b; 600) to tensile strength testing according to ASTM D-2969 using a gauge length of 660 mm,
calculating stress by dividing a load on the steel cord (250a, 250b; 500a, 500b; 600) by a cross-sectional area of the steel cord (250a, 250b; 500a, 500b; 600), wherein the cross-sectional area of the steel cord (250a, 250b; 500a, 500b; 600) is the sum of real cross-sectional area of individual filaments in the steel cord (250a, 250b; 500a, 500b; 600),
plotting stress value for a given strain up to a point of breakage, and fitting a whole curve defined by the plotted points with a linear trend line, wherein a slope of the linear trend line represents the stiffness of the steel cord (250a, 250b; 500a, 500b; 600), and

y is the diameter of the largest filament (520; 610) in the steel cord (250a, 250b; 500a, 500b; 600) measured in mm.

6. The non-pneumatic tire (100; 200; 300) of claim 5, wherein the steel cords (250a, 250b; 500a, 500b; 600) have a Lang Lay construction.

7. The non-pneumatic tire (100; 200; 300) of claim 6, wherein the steel cords (250a, 250b; 500a, 500b; 600) comprise a construction of 3x3x0.17 mm.

8. The non-pneumatic tire (100; 200; 300) of claim 5, wherein the support structure (130; 230; 350; 430) comprises elastomeric material.

9. The non-pneumatic tire (100; 200; 300) of claim 5, wherein the support structure (130; 230; 350) includes a plurality of loops (240a, 240b) extending laterally from a first side of the non-pneumatic tire (100; 200; 300) to second side of the non-pneumatic tire (100; 200; 300),

wherein each of the plurality of loops (240a, 240b) defines an opening that is visible from the first side of the non-pneumatic tire (100; 200; 300),
wherein each of the plurality of loops (240a, 240b) is in direct contact with both the inner ring (110; 210; 310) and the outer ring (120; 220; 320), and
wherein the plurality of loops (240a, 240b) includes at least a first loop (240a) and a second loop (240b), the first loop (240a) being in direct contact with the second loop (240b).

10. The non-pneumatic tire (100; 200; 300) of claim 9, wherein each of the plurality of loops (240a, 240b) is formed by a spiraled ribbon of elastomeric material having a single layer of reinforcement (250a, 250b; 360) disposed therein, and said reinforcement (250a, 250b; 360) comprises steel cords (250a, 250b; 500a, 500b; 600) having a Lang Lay construction.

**11.** The non-pneumatic tire (100; 200; 300) of claim 10, wherein the spiraled ribbon of elastomeric material includes exactly two steel cords (250a, 250b; 500a, 500b; 600) embedded therein.

**12.** The non-pneumatic tire (100; 200; 300) of claim 10, wherein the first loop (240a) includes a first extent (260a) and a second extent (260b) extending between the inner ring (110; 210; 310) and the outer ring (120; 220; 320), wherein the second loop (240b) includes a third extent (260c) and a fourth extent (260d) extending between the inner ring (110; 210; 310) and the outer ring (120; 220; 320), and wherein the second extent (260b) contacts the third extent (260c).

**13.** The non-pneumatic tire (100; 200; 300) of claim 12, wherein each of the first extent (260a), the second extent (260b), the third extent (260c), and the fourth extent (260d) are curved.

**Patentansprüche**

**1.** Verfahren zum Herstellen eines nichtpneumatischen Reifens (100; 200; 300; 400), das Verfahren umfassend:

Bereitstellen eines Innenrings (110; 210; 310), der einen ersten Durchmesser aufweist; Bereitstellen eines Außenrings (120; 220; 320), der einen zweiten Durchmesser aufweist, der größer als der erste Durchmesser ist, wobei der Außenring (120; 220; 320) im Wesentlichen koaxial zu dem Innenring (110; 210; 310) ist; Ausdehnen einer Stützstruktur (130; 230; 350) zwischen dem Innenring (110; 210; 310) und dem Außenring (120; 220; 320), wobei die Stützstruktur (130; 230; 350) eine darin angeordnete Verstärkungsschicht (250a, 250b; 360) einschließt, und die Verstärkungsschicht (250a, 250b; 360) eine oder mehrere Stahlkorde (250a, 250b; 500a, 500b; 600) umfasst, die mehrere Filamente (520; 610) oder Litzen (510; 620) von Filamenten enthalten, wobei der Stahlkord (250a, 250b; 500a, 500b; 600) die folgende Beziehung erfüllt:

$$x*y < 18.000 \text{ MPa*mm},$$

wobei x die Steifigkeit des Stahlkords (250a, 250b; 500a, 500b; 600) gemessen in MPa ist, wobei die Steifigkeit des Stahlkords (250a, 250b; 500a, 500b; 600) bestimmt wird durch: Unterziehen des Stahlkords (250a, 250b; 500a, 500b; 600) einer Zugfestigkeitsprüfung gemäß ASTM D-2969 unter Verwendung einer Messlänge von 660 mm, Berechnen von Spannung durch Dividieren einer Last auf den Stahlkord (250a, 250b; 500a, 500b; 600) durch eine Querschnittsfläche des Stahlkords (250a, 250b; 500a, 500b; 600), wobei die Querschnittsfläche des Stahlkords (250a, 250b; 500a, 500b; 600) die Summe der realen Querschnittsfläche einzelner Filamente in dem Stahlkord (250a, 250b; 500a, 500b; 600) ist, Auftragen eines Spannungswerts für eine gegebene Dehnung bis zu einem Bruchpunkt und Anpassen einer ganzen Kurve, die durch die aufgetragenen Punkte definiert ist, mit einer linearen Trendlinie, wobei eine Steigung der linearen Trendlinie die Steifigkeit des Stahlkords (250a, 250b; 500a, 500b; 600) darstellt, und y der Durchmesser des größten Filaments (520; 610) in dem Stahlkord (250a, 250b; 500a, 500b; 600) gemessen in mm ist.

**2.** Verfahren nach Anspruch 1, ferner umfassend ein Verdrehen der Stahlkorde (250a, 250b; 500a, 500b; 600) in einer Langschlagkonstruktion.

**3.** Verfahren nach Anspruch 2, ferner umfassend das Verdrehen der Stahlkorde (250a, 250b; 500a, 500b; 600), die in einer 3x3x0,17 mm Konstruktion umfasst sind.

**4.** Verfahren nach Anspruch 1, ferner umfassend ein Ausbilden der Stützstruktur (130; 230; 350) aus elastomerem Material.

**5.** Nichtpneumatischer Reifen (100; 200; 300), umfassend:

einen Innenring (110; 210; 310), der einen ersten Durchmesser aufweist; einen Außenring (120; 220; 320), der einen zweiten Durchmesser aufweist, der größer als der erste Durchmesser ist, wobei der Außenring (120; 220; 320) im Wesentlichen koaxial zu dem Innenring (110; 210; 310) ist; eine Stützstruktur (130; 230; 350), die sich zwischen dem Innenring (110; 210; 310) und dem Außenring (120; 220; 320) ausdehnt, wobei die Stützstruktur (130; 230; 350) eine darin angeordnete Verstärkungsschicht (250a, 250b; 360) einschließt, und die Verstärkungsschicht (250a, 250b; 360) eine oder mehrere Stahlkorde (250a, 250b; 500a, 500b; 600) umfasst, die mehrere Filamente (520; 610) oder Litzen (510; 620) von Filamenten enthalten, **dadurch gekennzeichnet, dass** der Stahlkord (250a, 250b; 500a, 500b; 600) die

 **EP 4 228 906 B1**  18

folgende Beziehung erfüllt:

$$x*y < 18.000 \text{ MPa*mm},$$

wobei x die Steifigkeit des Stahlkords (250a, 250b; 500a, 500b; 600) gemessen in MPa ist, wobei die Steifigkeit des Stahlkords (250a, 250b; 500a, 500b; 600) bestimmt wird durch:

Unterziehen des Stahlkords (250a, 250b; 500a, 500b; 600) einer Zugfestigkeitsprüfung gemäß ASTM D-2969 unter Verwendung einer Messlänge von 660 mm, Berechnen von Spannung durch Dividieren einer Last auf den Stahlkord (250a, 250b; 500a, 500b; 600) durch eine Querschnittsfläche des Stahlkords (250a, 250b; 500a, 500b; 600), wobei die Querschnittsfläche des Stahlkords (250a, 250b; 500a, 500b; 600) die Summe der realen Querschnittsfläche einzelner Filamente in dem Stahlkord (250a, 250b; 500a, 500b; 600) ist, Auftragen eines Spannungswerts für eine gegebene Dehnung bis zu einem Bruchpunkt und Anpassen einer ganzen Kurve, die durch die aufgetragenen Punkte definiert ist, mit einer linearen Trendlinie, wobei eine Steigung der linearen Trendlinie die Steifigkeit des Stahlkords (250a, 250b; 500a, 500b; 600) darstellt, und y der Durchmesser des größten Filaments (520; 610) in dem Stahlkord (250a, 250b; 500a, 500b; 600) gemessen in mm ist.

6. Nichtpneumatischer Reifen (100; 200; 300) nach Anspruch 5, wobei die Stahlkorde (250a, 250b; 500a, 500b; 600) eine Langschlagkonstruktion aufweisen.

7. Nichtpneumatischer Reifen (100; 200; 300) nach Anspruch 6, wobei die Stahlkorde (250a, 250b; 500a, 500b; 600) eine Konstruktion von 3x3x0,17 mm umfassen.

8. Nichtpneumatischer Reifen (100; 200; 300) nach Anspruch 5, wobei die Stützstruktur (130; 230; 350; 430) elastomeres Material umfasst.

9. Nichtpneumatischer Reifen (100; 200; 300) nach Anspruch 5, wobei die Stützstruktur (130; 230; 350) eine Vielzahl von Schleifen (240a, 240b) einschließt, die sich von einer ersten Seite des nichtpneumatischen Reifens (100; 200; 300) zu einer zweiten Seite des nichtpneumatischen Reifens (100; 200; 300) seitlich ausdehnen,

wobei jede der Vielzahl von Schleifen (240a, 240b) eine Öffnung definiert, die von der ersten Seite des nichtpneumatischen Reifens (100; 200; 300) aus sichtbar ist, wobei jede der Vielzahl von Schleifen (240a, 240b) in direktem Kontakt sowohl mit dem Innenring (110; 210; 310) als auch mit dem Außenring (120; 220; 320) steht, und wobei die Vielzahl von Schleifen (240a, 240b) mindestens eine erste Schleife (240a) und eine zweite Schleife (240b) einschließt, wobei die erste Schleife (240a) in direktem Kontakt mit der zweiten Schleife (240b) steht.

10. Nichtpneumatischer Reifen (100; 200; 300) nach Anspruch 9, wobei jede der Vielzahl von Schleifen (240a, 240b) durch ein spiralförmiges Band aus elastomerem Material ausgebildet ist, das eine einzige Verstärkungsschicht (250a, 250b; 360) darin angeordnet aufweist, und die Verstärkung (250a, 250b; 360) Stahlkorde (250a, 250b; 500a, 500b; 600) umfasst, die eine Langschlagkonstruktion aufweisen.

11. Nichtpneumatischer Reifen (100; 200; 300) nach Anspruch 10, wobei das spiralförmige Band aus elastomerem Material genau zwei Stahlkorde (250a, 250b; 500a, 500b; 600) einschließt, die darin eingebettet sind.

12. Nichtpneumatischer Reifen (100; 200; 300) nach Anspruch 10, wobei die erste Schleife (240a) eine erste Ausdehnung (260a) und eine zweite Ausdehnung (260b) einschließt, die sich zwischen dem Innenring (110; 210; 310) und dem Außenring (120; 220; 320) ausdehnen, wobei die zweite Schleife (240b) eine dritte Ausdehnung (260c) und eine vierte Ausdehnung (260d) einschließt, die sich zwischen dem Innenring (110; 210; 310) und dem Außenring (120; 220; 320) ausdehnen, und wobei die zweite Ausdehnung (260b) mit der dritten Ausdehnung (260c) in Kontakt steht.

13. Nichtpneumatischer Reifen (100; 200; 300) nach Anspruch 12, wobei jede der ersten Ausdehnung (260a), der zweiten Ausdehnung (260b), der dritten Ausdehnung (260c) und der vierten Ausdehnung (260d) gekrümmt sind.

**Revendications**

1. Procédé de fabrication d'un pneu non pneumatique (100 ; 200 ; 300 ; 400), le procédé comprenant :

la fourniture d'un anneau interne (110 ; 210 ; 310) ayant un premier diamètre ; la fourniture d'un anneau externe (120 ; 220 ; 320) ayant un second diamètre supérieur au premier diamètre, l'anneau externe (120 ; 220 ; 320) étant sensiblement coaxial avec l'anneau interne (110 ; 210 ; 310) ;

l'extension d'une structure de support (130 ; 230 ; 350) entre l'anneau interne (110 ; 210 ; 310) et l'anneau externe (120 ; 220 ; 320), dans lequel la structure de support (130 ; 230 ; 350) comporte une couche de renforcement (250a, 250b ; 360) disposée dans celle-ci, et ladite couche de renforcement (250a, 250b ; 360) comprend un ou plusieurs câblés en acier (250a, 250b ; 500a, 500b ; 600) contenant plusieurs filaments (520 ; 610) ou des brins (510 ; 620) de filaments, ledit câblé en acier (250a, 250b ; 500a, 500b ; 600) satisfaisant à la relation suivante :

$$x*y < 18\ 000\ MPa*mm,$$

dans lequel x est la rigidité du câblé en acier (250a, 250b ; 500a, 500b ; 600) mesurée en MPa,
dans lequel la rigidité du câblé en acier (250a, 250b ; 500a, 500b ; 600) est déterminée en :

soumettant le câblé en acier (250a, 250b ; 500a, 500b ; 600) à un essai de résistance à la traction selon ASTM D-2969 à l'aide d'une longueur entre repères de 660 mm, calculant une contrainte en divisant une charge sur le câblé en acier (250a, 250b ; 500a, 500b ; 600) par une surface de section transversale du câblé en acier (250a, 250b ; 500a, 500b ; 600), dans lequel la surface de section transversale du câblé en acier (250a, 250b ; 500a, 500b ; 600) est la somme de surfaces de section transversale réelles de filaments individuels dans le câblé en acier (250a, 250b ; 500a, 500b ; 600),
traçant une valeur de contrainte pour une déformation donnée jusqu'à un point de rupture, et ajustant une courbe entière définie par les points tracés avec une ligne de tendance linéaire, dans lequel une pente de la ligne de tendance linéaire représente la rigidité du câblé en acier (250a, 250b ; 500a, 500b ; 600), et
y est le diamètre du plus grand filament (520 ; 610) dans le câblé en acier (250a, 250b ; 500a, 500b ; 600) mesuré en mm.

2. Procédé selon la revendication 1, comprenant en outre le torsadage des câblés en acier (250a, 250b ; 500a, 500b ; 600) dans une construction de câblage Lang.

3. Procédé selon la revendication 2, comprenant en outre le torsadage des câblés en acier (250a, 250b ; 500a, 500b ; 600) dans une construction de 3x3x0,17 mm.

4. Procédé selon la revendication 1, comprenant en outre la formation de la structure de support (130 ; 230 ; 350) en matériau élastomère.

5. Pneu non pneumatique (100 ; 200 ; 300) comprenant :

un anneau interne (110 ; 210 ; 310) ayant un premier diamètre ;
un anneau externe (120 ; 220 ; 320) ayant un second diamètre supérieur au premier diamètre, l'anneau externe (120 ; 220 ; 320) étant sensiblement coaxial avec l'anneau interne (110 ; 210 ; 310) ;
une structure de support (130 ; 230 ; 350) s'étendant entre l'anneau interne (110 ; 210 ; 310) et l'anneau externe (120 ; 220 ; 320), dans lequel la structure de support (130 ; 230 ; 350) comporte une couche de renforcement (250a, 250b ; 360) disposée dans celle-ci, et ladite couche de renforcement (250a, 250b ; 360) comprend un ou plusieurs câblés en acier (250a, 250b ; 500a, 500b ; 600) contenant plusieurs filaments (520 ; 610) ou des brins (510 ; 620) de filaments,
**caractérisé en ce que**
ledit câblé en acier (250a, 250b ; 500a, 500b ; 600) satisfait à la relation suivante :

$$x*y < 18\ 000\ MPa*mm,$$

dans lequel x est la rigidité du câblé en acier (250a, 250b ; 500a, 500b ; 600) mesurée en MPa,
dans lequel la rigidité du câblé en acier (250a, 250b ; 500a, 500b ; 600) est déterminée en :

soumettant le câblé en acier (250a, 250b ; 500a, 500b ; 600) à un essai de résistance à la traction selon ASTM D-2969 à l'aide d'une longueur entre repères de 660 mm, calculant une contrainte en divisant une charge sur le câblé en acier (250a, 250b ; 500a, 500b ; 600) par une surface de section transversale du câblé en acier (250a, 250b ; 500a, 500b ; 600), dans lequel la surface de section transversale du câblé en acier (250a, 250b ; 500a, 500b ; 600) est la somme de surfaces de section transversale réelles de filaments individuels dans le câblé en acier (250a, 250b ; 500a, 500b ; 600),

traçant une valeur de contrainte pour une déformation donnée jusqu'à un point de rupture, et ajustant une courbe entière définie par les points tracés avec une ligne de tendance linéaire, dans lequel une pente de la ligne de tendance linéaire représente la rigidité du câblé en acier (250a, 250b ; 500a, 500b ; 600), et

y est le diamètre du plus grand filament (520 ; 610) dans le câblé en acier (250a, 250b ; 500a, 500b ; 600) mesuré en mm.

6. Pneu non pneumatique (100 ; 200 ; 300) selon la revendication 5, dans lequel les câblés en acier (250a, 250b ; 500a, 500b ; 600) ont une construction de câblage Lang.

7. Pneu non pneumatique (100 ; 200 ; 300) selon la revendication 6, dans lequel les câblés en acier (250a, 250b ; 500a, 500b ; 600) comprennent une structure de 3x3x0,17 mm.

8. Pneu non pneumatique (100 ; 200 ; 300) selon la revendication 5, dans lequel la structure de support (130 ; 230 ; 350 ; 430) comprend un matériau élastomère.

9. Pneu non pneumatique (100 ; 200 ; 300) selon la revendication 5, dans lequel la structure de support (130 ; 230 ; 350) comporte une pluralité de boucles (240a, 240b) s'étendant latéralement à partir d'un premier côté du pneu non pneumatique (100 ; 200 ; 300) vers un second côté du pneu non pneumatique (100 ; 200 ; 300),

dans lequel chacune de la pluralité de boucles (240a, 240b) définit une ouverture qui est visible du premier côté du pneu non pneumatique (100 ; 200 ; 300),
dans lequel chacune de la pluralité de boucles (240a, 240b) est en contact direct avec l'anneau interne (110 ; 210 ; 310) et l'anneau externe (120 ; 220 ; 320), et
dans lequel la pluralité de boucles (240a, 240b) comportent au moins une première boucle (240a) et une seconde boucle (240b), la première boucle (240a) étant en contact direct avec la seconde boucle (240b).

10. Pneu non pneumatique (100 ; 200 ; 300) selon la revendication 9, dans lequel chacune de la pluralité de boucles (240a, 240b) est formée par un ruban spiralé de matériau élastomère ayant une seule couche de renforcement (250a, 250b ; 360) disposée dans celui-ci, et ledit renforcement (250a, 250b ; 360) comprend des câblés en acier (250a, 250b ; 500a, 500b ; 600) ayant une construction de câblage Lang.

11. Pneu non pneumatique (100 ; 200 ; 300) selon la revendication 10, dans lequel le ruban spiralé de matériau élastomère comporte exactement deux câblés en acier (250a, 250b ; 500a, 500b ; 600) intégrés dans celui-ci.

12. Pneu non pneumatique (100 ; 200 ; 300) selon la revendication 10, dans lequel la première boucle (240a) comporte une première extension (260a) et une deuxième extension (260b) s'étendant entre l'anneau interne (110 ; 210 ; 310) et l'anneau externe (120 ; 220 ; 320), dans lequel la seconde boucle (240b) comporte une troisième extension (260c) et une quatrième extension (260d) s'étendant entre l'anneau interne (110 ; 210 ; 310) et l'anneau externe (120 ; 220 ; 320), et dans lequel la deuxième extension (260b) entre en contact avec la troisième extension (260c).

13. Pneu non pneumatique (100 ; 200 ; 300) selon la revendication 12, dans lequel chacune parmi la première extension (260a), la deuxième extension (260b), la troisième extension (260c) et la quatrième extension (260d) est incurvée.

**FIG. 1**

**FIG. 2**

**FIG. 3**

EP 4 228 906 B1

FIG. 4

400

410

420

430

FIG. 5

**FIG. 6**

EP 4 228 906 B1

500b

510
510
510

520
520

FIG. 7B

500a

520
520

510
510
510

FIG. 7A

FIG. 8

**EP 4 228 906 B1**

**Patent documents cited in the description**

- US 2010132858 A1
- US 2017008342 A1